# EUROPEAN PATENT APPLICATION

(11) **EP 4 753 019 A1**
(43) Date of publication of application: **03.06.2026**
(21) Application number: 24857673.8
(22) Date of filing: 29.02.2024
(51) Int. Cl.: H01M 10/613

(54) **IMMERSION LIQUID COOLING APPARATUS AND ENERGY STORAGE DEVICE**

(30) Priority: 25.08.2023 CN 202311085199
(71) Applicant: Huawei Digital Power Technologies Co., Ltd., Shenzhen, Guangdong 518043 (CN)
(72) Inventor: CAO, Jiahao, Shenzhen, Guangdong 518043 (CN); HONG, Fangjun, Shenzhen, Guangdong 518043 (CN); FAN, Simiao, Shenzhen, Guangdong 518043 (CN)
(74) Representative: Gill Jennings & Every LLP
(86) International application number: PCT/CN2024/079429
(87) International publication number: WO 2025/044118

(57) **Abstract**

An immersion liquid cooling apparatus and an energy storage device are provided. The immersion liquid cooling apparatus includes a bottom plate, a top plate, and a plurality of side plates, where the bottom plate and the top plate are spaced apart in a first direction, and the plurality of side plates, the bottom plate, and the top plate are enclosed to form sealed accommodation space. A first flow channel is provided inside the bottom plate, a plurality of first via holes are provided on a side that is of the bottom plate and that faces the top plate in the first direction, and the first via holes are in communication with the first flow channel and the accommodation space. In addition, at least one arrangement area is provided on the side that is of the bottom plate and that faces the top plate in the first direction, and the first via holes and the arrangement area are staggered. A second flow channel is provided inside the top plate, a plurality of second via holes are provided on a side that is of the top plate and that faces the bottom plate in the first direction, and the second via holes are in communication with the second flow channel and the accommodation space. A fluid in the flow channel flushes an energy storage module from bottom to top or from top to bottom through the via holes, and performs convection heat exchange with the energy storage module. An overall structure of the apparatus is simple, layout space of the energy storage module is large, and energy density of the energy storage device is high.

## Description

### CROSS-REFERENCE TO RELATED APPLICATIONS

This application claims priority to Chinese Patent Application No. 202311085199.8, filed with the China National Intellectual Property Administration on August 25, 2023 and entitled "IMMERSION LIQUID COOLING APPARATUS AND ENERGY STORAGE DEVICE", which is incorporated herein by reference in its entirety.

### TECHNICAL FIELD

This application relates to the energy field, and in particular, to an immersion liquid cooling apparatus and an energy storage device.

### BACKGROUND

Transition of an energy landscape from fossil energy to new energy promotes rapid development of electric automobiles and an energy storage industry. Lithium batteries are commonly used for energy storage of the electric automobiles. However, charge and discharge efficiency, a capacity, safety, and a service life of the lithium battery are greatly affected by a temperature. If the temperature is excessively high or excessively low, or there is a large temperature difference between battery strings, performance of the battery strings is directly affected, resulting in premature failure of a battery system, or even resulting in a series of accidents such as fire and explosion.

To improve performance and safety of the battery strings, a thermal management system needs to be configured for a battery pack. Liquid cooling is a mainstream battery thermal management technology at present. There are two main implementations for liquid cooling: one is cold plate liquid cooling, and the other is immersion liquid cooling. Compared with cold plate liquid cooling, immersion liquid cooling has apparent advantages in temperature control and temperature equalization. However, to ensure heat exchange effect, for immersion liquid cooling, a flow guide structure needs to be added in a container, to increase a flow velocity of a fluid, which results in a more complex battery pack structure and higher costs.

### SUMMARY

This application provides an immersion liquid cooling apparatus and an energy storage device, to resolve a problem that a structure of an immersion liquid cooling battery pack is complex.

According to a first aspect, this application provides an immersion liquid cooling apparatus, where the apparatus may include a bottom plate, a top plate, and a plurality of side plates. The bottom plate and the top plate may be spaced apart in a first direction, the plurality of side plates, the bottom plate, and the top plate may be enclosed to form sealed accommodation space, and the accommodation space may accommodate an energy storage module or another component that needs heat exchange. A first flow channel may be provided inside the bottom plate, a plurality of first via holes may be provided on a side that is of the bottom plate and that faces the top plate in the first direction, the first via holes may be in communication with the first flow channel and the accommodation space; and at least one arrangement area is provided on the side that is of the bottom plate and that faces the top plate in the first direction, the arrangement area is used to arrange an energy storage module or another component that needs heat exchange, and the first via holes and the arrangement area are staggered. A second flow channel may be provided inside the top plate, a plurality of second via holes may be provided on a side that is of the top plate and that faces the bottom plate in the first direction, and the second via holes may be in communication with the second flow channel and the accommodation space.

In the technical solution provided in this application, in actual application, the energy storage module or another component that needs heat exchange may be provided in the arrangement area of the bottom plate, and the first via hole and the arrangement area are staggered. A fluid entering the first flow channel may jet into the accommodation space through the first via holes. The fluid flushes side walls and poles of the energy storage module at a high speed, to implement efficient cooling on the energy storage module. The fluid immerses the energy storage module, enters the second flow channel through the second via holes on the top plate, and then flows out of the second flow channel. Alternatively, a fluid entering the second flow channel may jet into the accommodation space through the second via holes, the fluid flushes the energy storage module at a high speed to cool the energy storage module, and the fluid may enter the first flow channel through the first via holes on the bottom plate, and then flow out of the first flow channel. When there is no flow guide structure, the fluid in the flow channel may flush the energy storage module from bottom to top or from top to bottom through the via holes, and perform convection heat exchange with the energy storage module. The fluid flowing at the high speed can ensure high efficiency of convection heat exchange on the energy storage module. An overall structure of the apparatus is simple, and a problem that a structure of an immersion liquid cooling battery pack is complex is resolved. In addition, no flow guide structure in the apparatus occupies layout space of the energy storage module, and energy density of the energy storage device is high. In addition, a problem of a large temperature difference between energy storage modules at an inlet and an outlet of the fluid can be resolved, ensuring temperature consistency of the energy storage modules at different positions.

In a specific implementation solution, the plurality of first via holes may be arranged in a second direction to form at least two rows of first via holes, and the second direction may be perpendicular to the first direction; and the arrangement area may be located between two adjacent rows of the first via holes. The fluid jetted from the first via holes may flush two corresponding side walls of the energy storage module in the second direction, to cool the energy storage module.

In a specific implementation solution, the plurality of first via holes may be arranged in a third direction to form at least two columns of first via holes, and the third direction may be perpendicular to the first direction and the second direction; and the arrangement area may be located between two adjacent columns of the first via holes. The fluid jetted from the first via holes may flush two corresponding side walls of the energy storage module in the third direction, to cool the energy storage module.

In a specific implementation solution, the plurality of second via holes may be arranged in a second direction to form at least two rows of second via holes. The fluid may enter the second flow channel through the second via holes arranged in rows.

In a specific implementation solution, the plurality of second via holes may be arranged in a third direction to form at least two columns of second via holes. The fluid may enter the second flow channel through the second via holes arranged in columns.

In an optional solution, the at least two rows of second via holes and the at least two rows of first via holes may be staggered in the first direction. The second via holes arranged in rows and the first via holes arranged in rows are staggered in the first direction, so that a flow velocity of the fluid around the poles of the energy storage module can be increased, cooling and heat dissipation on the poles can be enhanced, and axial temperature consistency of the energy storage module can be improved.

In another optional solution, the at least two rows of second via holes and the at least two rows of first via holes may be provided in a one-to-one correspondence in the first direction. A flow velocity of the fluid flowing through the side walls of the energy storage module is high, and effect of cooling and heat dissipation on the side walls of the energy storage module is strong, so that axial temperature consistency of the energy storage module can be improved.

In a specific implementation solution, the plurality of first via holes may be arranged to form at least one annular first via hole group, and the arrangement area may be located in an annular range of the first via hole group. Not only convection heat exchange with a cuboid-shaped or cube-shaped energy storage module but also convection heat exchange with a cylinder-shaped energy storage module may be performed.

In a specific implementation solution, the plurality of second via holes may be arranged to form at least one annular second via hole group, and at least one part of the arrangement area may be located in an annular range of the second via hole group in the first direction. The energy storage module is located in the annular range of the second via hole group, a flow velocity of the fluid flowing through the side walls of the energy storage module is high, and effect of cooling and heat dissipation on the side walls of the energy storage module is strong, so that axial temperature consistency of the energy storage module can be improved. Alternatively, the energy storage module and the second via hole group may be staggered, so that a flow velocity of the fluid around the poles of the energy storage module can be increased, cooling and heat dissipation on the poles can be enhanced, and axial temperature consistency of the energy storage module can be improved.

In a specific implementation solution, the immersion liquid cooling apparatus may further include a liquid inlet and a liquid outlet, where the liquid inlet may be in communication with the first flow channel, and the liquid outlet may be in communication with the second flow channel; or the liquid inlet may be in communication with the second flow channel, and the liquid outlet may be in communication with the first flow channel. An external low-temperature fluid may enter the accommodation space in the apparatus from the liquid inlet, exchange heat with the energy storage module, and flow out of the accommodation space from the liquid outlet. This process is repeated, to continuously cool the energy storage module.

When the liquid inlet and the liquid outlet are specifically provided, the liquid inlet may be provided at a middle position of the bottom plate in the second direction, and the liquid outlet may be provided at a middle position of the top plate in the second direction. The fluid entering the first flow channel may jet into the accommodation space through the first via holes in a short flow path, so that effect of cooling the energy storage module can be improved. The fluid that enters the second flow channel through the second via holes may enter the liquid outlet through a short flow path, so that heat can be quickly taken out, and effect of cooling the energy storage module can be improved. Alternatively, the liquid inlet may be provided at a middle position of the top plate in the second direction, and the liquid outlet may be provided at a middle position of the bottom plate in the second direction. The fluid entering the second flow channel may jet into the accommodation space through the second via holes in a short flow path, so that effect of cooling the energy storage module can be improved. The fluid that enters the first flow channel through the first via holes may enter the liquid outlet through a short flow path, so that heat can be quickly taken out, and effect of cooling the energy storage module can be improved. In addition, when the fluid flows from top to bottom, a flow velocity of the fluid may be further increased under an action of gravity, to help improve efficiency of convection heat exchange between the fluid and the energy storage module.

In a specific implementation solution, the liquid inlet and the liquid outlet may be provided on a same side of the immersion liquid cooling apparatus in the second direction, and the second direction is perpendicular to the first direction. This helps shorten a length of a pipe connected to the outside.

According to a second aspect, this application further provides an energy storage device, where the energy storage device may include at least one energy storage module, and the immersion liquid cooling apparatus according to any one of the possible implementation solutions of the first aspect. The energy storage module may be accommodated in the accommodation space.

In the energy storage device provided in this application, the immersion liquid cooling apparatus used can ensure temperature consistency of energy storage modules at different positions. There is no flow guide structure inside the apparatus, and the structure is simple. In addition, layout space of the energy storage module is large, and energy density of the energy storage device is high.

In a specific implementation solution, the plurality of energy storage modules may be arranged in a plurality of rows in the second direction, or the plurality of energy storage modules may be arranged in a plurality of columns in the third direction. The energy storage module may be arranged in the arrangement area, and the energy storage module and the first via holes are staggered. The fluid may flush the energy storage module from bottom to top or from top to bottom through the via holes, and perform convection heat exchange with the energy storage module.

In a specific implementation solution, the plurality of rows of second via holes respectively correspond to poles of the plurality of rows of energy storage modules in the first direction. A flow velocity of the fluid around the poles of the energy storage module can be increased, cooling and heat dissipation on the poles can be enhanced, and axial temperature consistency of the energy storage module can be improved.

### BRIEF DESCRIPTION OF DRAWINGS

FIG. 1 is a perspective view of a three-dimensional structure of an immersion liquid cooling apparatus according to this application;
FIG. 2 is a cross-sectional diagram of an immersion liquid cooling apparatus in a second direction according to this application;
FIG. 3 is a perspective top view of a partial structure of an immersion liquid cooling apparatus according to this application;
FIG. 4 is a cross-sectional diagram of a structure of an immersion liquid cooling apparatus in a second direction according to this application;
FIG. 5 is a cross-sectional diagram of a structure of an immersion liquid cooling apparatus in a third direction according to this application;
FIG. 6 is another cross-sectional diagram of a structure of an immersion liquid cooling apparatus in a second direction according to this application;
FIG. 7 is another cross-sectional diagram of a structure of an immersion liquid cooling apparatus in a third direction according to this application; and
FIG. 8 is another cross-sectional diagram of a structure of an immersion liquid cooling apparatus in a second direction according to this application;
FIG. 9 is another cross-sectional diagram of a structure of an immersion liquid cooling apparatus in a third direction according to this application; and
FIG. 10 is a diagram of a structure of a bottom plate of an immersion liquid cooling apparatus according to this application.

### Reference numerals:

100: bottom plate; 200: top plate; 300: side plate; 400: energy storage module;
500-liquid inlet; 600-liquid outlet; 101-first flow channel; 102-first via hole;
201-second flow channel; 202-second via hole; 401-pole; 110-first via hole group.

### DESCRIPTION OF EMBODIMENTS

To make the objectives, technical solutions, and advantages of this application clearer, the following further describes embodiments of this application in detail with reference to the accompanying drawings. However, example implementations may be implemented in a plurality of forms, and should not be construed as being limited to implementations described herein. Identical reference numerals in the accompanying drawings indicate identical or similar structures. Therefore, repeated description thereof is omitted. Expressions of positions and directions in embodiments of this application are described by using the accompanying drawings as an example. However, changes may also be made as required, and all the changes fall within the protection scope of this application. The accompanying drawings in embodiments of this application are merely used to illustrate a relative position relationship and do not represent an actual scale.

Specific details are described in the following descriptions to facilitate understanding of this application. However, embodiments of this application can be implemented in a plurality of manners different from those described herein, and a person skilled in the art can perform similar promotion without departing from the connotation of embodiments of this application. Therefore, this application is not limited to the specific implementations disclosed below.

For ease of understanding, an application scenario of an immersion liquid cooling apparatus in this application is first described. An immersion liquid cooling apparatus provided in embodiments of this application may be adapted to an energy storage device, such as a vehicle-mounted battery pack or a photovoltaic battery, or may be adapted to another electronic device, such as a data center. The immersion liquid cooling apparatus provided in embodiments of this application may be used as a heat dissipation apparatus of an energy storage module, and implements heat dissipation of the energy storage module in a liquid cooling manner. Using an energy storage device as an example, in actual application, the energy storage device may include one or more energy storage modules, and the plurality of energy storage modules may be accommodated inside the immersion liquid cooling apparatus. For a current immersion liquid cooling battery pack, to ensure heat exchange effect, a flow guide structure needs to be added in a liquid container to increase a flow velocity of a fluid. Consequently, a structure of the battery pack is complex.

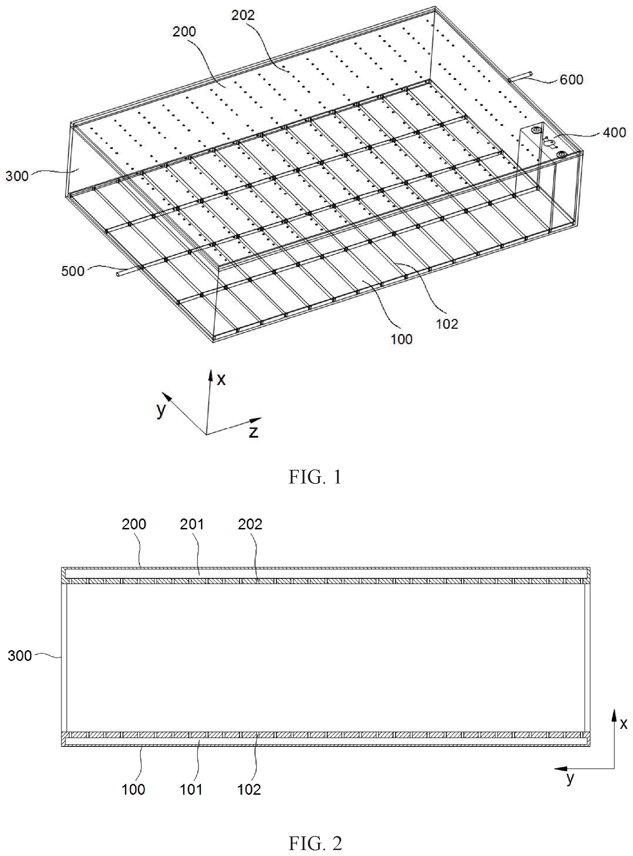

In view of this, this application provides an immersion liquid cooling apparatus, to implement high-speed fluid flow in a via hole jet manner, eliminating the need of the flow guide structure and simpflying a structure of the apparatus. FIG. 1 is a perspective view of a three-dimensional structure of an immersion liquid cooling apparatus according to this application. For coordinate directions in the following figures, a direction indicated by an x-axis represents a first direction, a direction indicated by a y-axis represents a second direction, and a direction indicated by a z-axis represents a third direction. The second direction may be perpendicular to the first direction, and the third direction may be perpendicular to the first direction and the second direction. The first direction may be understood as a height direction of the apparatus, the second direction may be understood as a width direction of the apparatus, and the third direction may be understood as a length direction of the apparatus. As shown in FIG. 1, the immersion liquid cooling apparatus provided in this embodiment of this application may include a bottom plate 100, a top plate 200, and a plurality of side plates 300. The bottom plate 100 and the top plate 200 may be spaced apart in the first direction. The plurality of side plates 300 may be provided in the first direction and enclosed with the bottom plate 100 and the top plate 200 to form sealed accommodation space. The accommodation space may accommodate one or more energy storage modules 400 (FIG. 1 shows only one energy storage module 400) or another component that needs heat exchange.

During specific implementation, the energy storage module 400 may be a battery module or the like. Specifically, the battery module may be a cell, and a plurality of cells in the accommodation space may form a battery pack (pack). When there are a plurality of energy storage modules 400, the plurality of energy storage modules 400 may be placed and fastened on the bottom plate 100, and there may be a spacing between the plurality of energy storage modules 400 and the top plate 200. In the accommodation space, the plurality of energy storage modules 400 may be arranged in a plurality of rows in the second direction, or arranged in a plurality of columns in the third direction, or arranged in a plurality of rows in the second direction and in a plurality of columns in the third direction. In each column of energy storage modules 400, positive poles of two adjacent energy storage modules 400 may be electrically connected through a positive busbar. One column of energy storage modules 400, on the whole, may be electrically connected to a main positive busbar through a positive busbar. The plurality of columns of energy storage modules 400 may be electrically connected to the main positive busbar together. Similarly, in each column of energy storage modules 400, negative poles of two adjacent energy storage modules 400 may be electrically connected through a negative busbar. One column of energy storage modules 400, on the whole, may be electrically connected to a main negative busbar through a negative busbar. The plurality of columns of energy storage modules 400 may be electrically connected to the main negative busbar together.

FIG. 2 is a cross-sectional diagram of an immersion liquid cooling apparatus in a second direction according to this application. A cross section of the bottom plate and a cross section of the top plate in FIG. 2 may be located in different planes. As shown in FIG. 2, a first flow channel 101 may be provided inside the bottom plate 100. Specifically, the first flow channel 101 may be an interlayer inside the bottom plate 100; or the first flow channel 101 may be a pipe provided inside the bottom plate 100, where the pipe may be, but is not limited to, a straight pipe or a curved pipe, and a cross-sectional shape of the pipe may be, but is not limited to, a circle, an ellipse, a polygon, or the like. A plurality of first flow channels 101 may be provided inside the bottom plate 100. With reference to FIG. 1, a plurality of first via holes 102 may be provided on a side that is of the bottom plate 100 and that faces the top plate 200 in the first direction, and each first via hole 102 may be in communication with the first flow channel 101 and the accommodation space. When the plurality of first flow channels 101 are provided inside the bottom plate 100, one first flow channel 101 may be in communication with one or more first flow channels 101.

A second flow channel 201 may be provided inside the top plate 200. Specifically, the second flow channel 201 may be an interlayer inside the top plate 200; or the second flow channel 201 may be a pipe provided inside the top plate 200. A plurality of second via holes 202 may be provided on a side that is of the top plate 200 and that faces the bottom plate 100 in the first direction, and each second via hole 202 may be in communication with the second flow channel 201 and the accommodation space. For a disposition status of the second flow channel 201, refer to the first flow channel 101, and for a disposition status of the second via holes 202, refer to the first via holes 102. Arrangement density of the first via holes 102 and the second via holes 202 in FIG. 2 is merely an example. In this embodiment of this application, a quantity and a shape of flow channels inside the bottom plate 100 and the top plate 200, and a quantity and a shape of via holes that are in communication with the flow channels and the accommodation space are not limited, and may be specifically set based on an actual requirement.

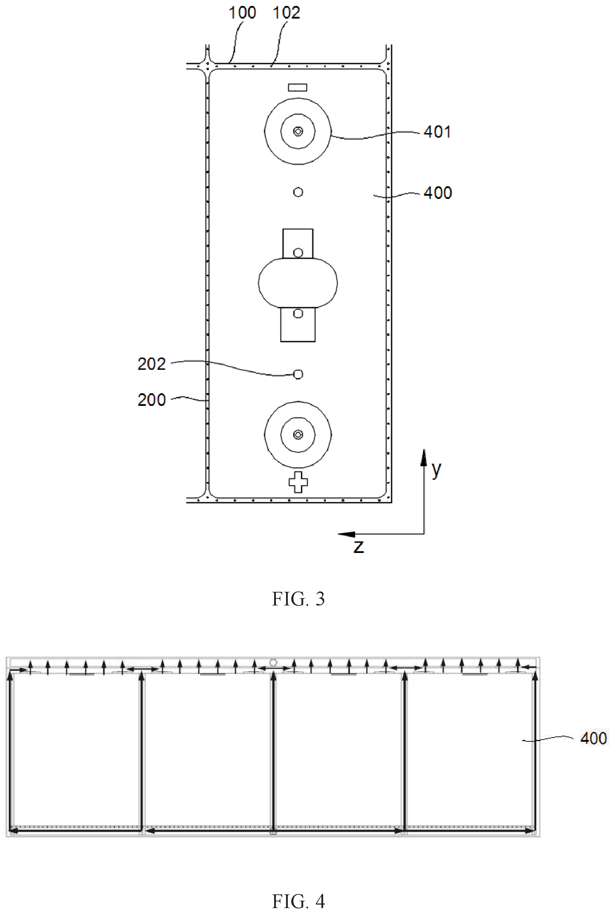

FIG. 3 is a perspective top view of a partial structure of an immersion liquid cooling apparatus according to this application. As shown in FIG. 3, one or more arrangement areas are provided on the side that is of the bottom plate 100 and that faces the top plate 200 in the first direction, and the first via hole 102 and the arrangement area are staggered. In actual application, the energy storage module 400 is provided in the arrangement area, so that the energy storage module 400 and the first via hole 102 are staggered, that is, the energy storage module 400 avoids the first via hole 102, and the first via hole 102 may be located in a gap between adjacent energy storage modules 400.

In actual application, a fluid entering the first flow channel 101 may jet into the accommodation space through the first via holes 102. The fluid flushes side walls and poles 401 of the energy storage module 400 at a high speed, to implement efficient cooling on the energy storage module 400. The fluid immerses the energy storage module 400, enters the second flow channel 201 through the second via holes 202 on the top plate 200, and then flows out of the second flow channel 201. Alternatively, a fluid entering the second flow channel 201 may jet into the accommodation space through the second via holes 202, the fluid flushes the energy storage module 400 at a high speed to cool the energy storage module 400, and the fluid may enter the first flow channel 101 through the first via holes 102 on the bottom plate 100, and then flow out of the first flow channel 101. When there is no flow guide structure, the fluid may flush the energy storage module 400 at a high speed through the via holes from bottom to top or from top to bottom based on axial (first direction) jet-driven siphon, and perform convection heat exchange with the energy storage module 400. The fluid flowing at the high speed can ensure high efficiency of convection heat exchange on the energy storage module 400. An overall structure of the apparatus is simple, and a problem that a structure of an immersion liquid cooling battery pack is complex is resolved. In addition, no flow guide structure in the apparatus occupies layout space of the energy storage module 400, and energy density of the energy storage device is high. In addition, a problem of a large temperature difference between energy storage modules 400 at an inlet and an outlet of the fluid can be resolved, ensuring temperature consistency of the energy storage modules 400 at different positions.

In a possible implementation, with reference to FIG. 1, the plurality of first via holes 102 may be arranged in the second direction, and form at least two rows of first via holes 102, and each arrangement area may be located between two adjacent rows of the first via holes 102. Therefore, in actual application, each energy storage module 400 may be located between two adjacent rows of the first via holes 102, and a fluid jetted from the first via holes 102 may flush two corresponding side walls of the energy storage module 400 in the second direction, to cool the energy storage module 400. In addition, the plurality of first via holes 102 may be arranged in the third direction, and form at least two columns of first via holes 102. Each arrangement area may be located between two adjacent columns of first via holes 102. Therefore, in actual application, each energy storage module 400 may be located between two adjacent columns of first via holes 102, and the fluid jetted from the first via holes 102 may flush two corresponding side walls of the energy storage module 400 in the third direction, to cool the energy storage module 400. An area of contact between the fluid and the energy storage module 400 is large, and a temperature difference between surfaces of the energy storage module 400 is small, so that cooling effect on the energy storage module 400 can be improved. FIG. 1 shows an example of a possible arrangement case of the plurality of first via holes 102. As shown in FIG. 1, the plurality of first via holes 102 are arranged in the second direction and form 16 rows, and are also arranged in the third direction and form five columns. The plurality of first via holes 102 form 15×4 grid areas. One energy storage module 400 may be provided in each grid area, and a total of 60 energy storage modules 400 may be provided in the accommodation space. For each energy storage module 400, side walls of the energy storage module 400 in a circumferential direction (a direction around the first direction) can be cooled, and the energy storage module 400 can be cooled sufficiently on the whole.

In a specific implementation, the plurality of second via holes 202 may be arranged in the second direction, and form at least two rows of second via holes 202. FIG. 1 shows an example of a possible arrangement case of the plurality of second via holes 202. As shown in FIG. 1, the plurality of second via holes 202 are arranged in the second direction and form 15 rows.

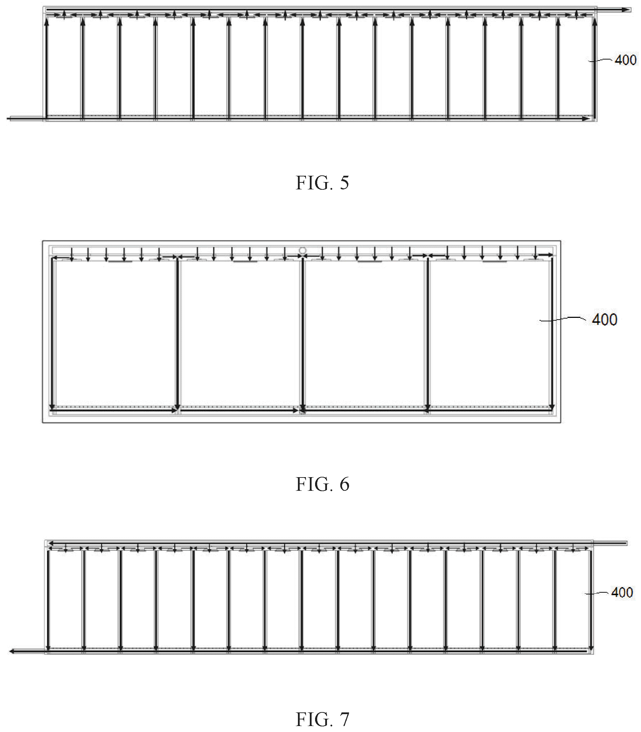

FIG. 4 is a cross-sectional diagram of a structure of an immersion liquid cooling apparatus in a second direction according to this application. FIG. 5 is a cross-sectional diagram of a structure of an immersion liquid cooling apparatus in a third direction according to this application. FIG. 4 and FIG. 5 show an example in which a fluid jets into the accommodation space through the first via holes 102, and flows out of the accommodation space through the second via holes 202, that is, the fluid flows from bottom to top. With reference to FIG. 1, FIG. 4, and FIG. 5, at least two rows of second via holes 202 and at least two rows of first via holes 102 are staggered in the first direction. For example, the at least two rows of second via holes 202 may be respectively located right above or near poles of at least two rows of energy storage modules 400. For any row of second via holes 202, the second via holes 202 may be located right above or near poles of one row of energy storage modules 400. In actual application, the fluid jets into the accommodation space through the first via holes 102, flows through circumferential side walls of the energy storage module 400, and performs convection heat exchange with the circumferential side walls of the energy storage module 400. The fluid gradually immerses the energy storage module 400, and flows out of the accommodation space through the second via holes 202. In a process of flowing out of the accommodation space, the fluid performs convection heat exchange with poles of the energy storage module 400. The second via holes 202 arranged in rows and the first via holes 102 arranged in rows are staggered in the first direction, so that a flow velocity of the fluid around the poles of the energy storage module 400 can be increased, cooling and heat dissipation on the poles can be enhanced, and axial temperature consistency of the energy storage module 400 can be improved.

FIG. 6 is another cross-sectional diagram of a structure of an immersion liquid cooling apparatus in a second direction according to this application. FIG. 7 is another cross-sectional diagram of a structure of an immersion liquid cooling apparatus in a third direction according to this application. A difference from FIG. 4 and FIG. 5 lies in that, FIG. 6 and FIG. 7 show an example in which a fluid jets into the accommodation space through the second via holes 202 and flows out of the accommodation space through the first via holes 102, that is, the fluid flows from top to bottom. With reference to FIG. 1, FIG. 6, and FIG. 7, at least two rows of second via holes 202 and at least two rows of first via holes 102 are staggered in the first direction. In actual application, the fluid jets into the accommodation space through the second via holes 202. The fluid flows through the poles of the energy storage module 400 and performs convection heat exchange with the poles of the energy storage module 400. The fluid is distributed on top of the energy storage module 400, flows along circumferential side walls of the energy storage module 400, performs convection heat exchange with the circumferential side walls of the energy storage module 400, and flows out of the accommodation space through the first via holes 102. The fluid jetted from the second via holes 202 first flows through the poles of the energy storage module 400. A flow velocity of the fluid around the poles of the energy storage module 400 is high, and effect of cooling and heat dissipation on the poles is strong, so that axial temperature consistency of the energy storage module 400 can be improved.

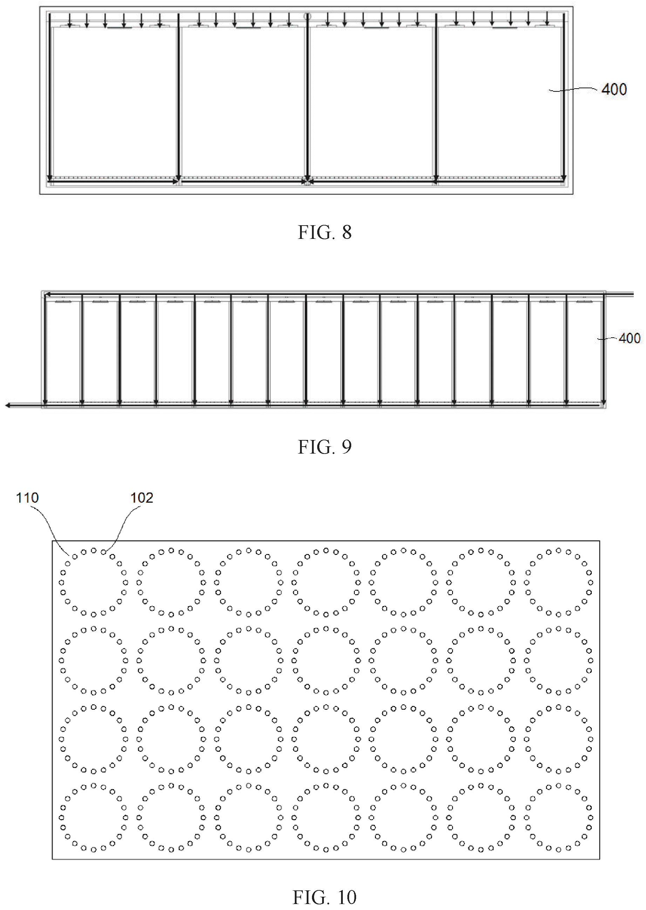

FIG. 8 is another cross-sectional diagram of a structure of an immersion liquid cooling apparatus in a second direction according to this application. FIG. 9 is another cross-sectional diagram of a structure of an immersion liquid cooling apparatus in a third direction according to this application. FIG. 8 and FIG. 9 show an example in which a fluid jets into the accommodation space through the second via holes 202, and flows out of the accommodation space through the first via holes 102, that is, the fluid flows from top to bottom. A difference from FIG. 6 and FIG. 7 lies in that, in FIG. 8 and FIG. 9, at least two rows of second via holes 202 may be provided in a one-to-one correspondence in the first direction with at least two rows of first via holes 102. In this case, the second via holes 202 are provided in a similar manner to the first via holes 102. For each row of second via holes 202, the second via holes 202 and each row of energy storage modules 400 may be staggered in the first direction, that is, the energy storage module 400 avoids the second via hole 202, and the second via hole 202 may be located in a gap between adjacent energy storage modules 400. In actual application, a fluid jets into the accommodation space through the second via holes 202. The fluid flows through circumferential side walls of the energy storage module 400 and performs convection heat exchange with the circumferential side walls of the energy storage module 400. A part of the fluid flows out of the accommodation space through the first via holes 102. A part of the fluid accumulates in the accommodation space and gradually immerses the energy storage module 400. In this case, the fluid may flow through the poles of the energy storage module 400 after jetting into the accommodation space through the second via holes 202, and perform convection heat exchange with the poles of the energy storage module 400. A flow velocity of the fluid around the poles of the energy storage module 400 is high, and effect of cooling and heat dissipation on the poles is strong, so that axial temperature consistency of the energy storage module 400 can be improved.

For a flow direction of the fluid and a relative position relationship between the second via holes 202 and the first via holes 102 arranged in rows in the first direction, in addition to the foregoing possible embodiments, the fluid may alternatively jet into the accommodation space through the first via holes 102 and flow out of the accommodation space through the second via holes 202, that is, the fluid flows from bottom to top. The at least two rows of second via holes 202 are provided in a one-to-one correspondence in the first direction with the at least two rows of first via holes 102. In actual application, the fluid jets into the accommodation space through the first via holes 102, flows through the circumferential side walls of the energy storage module 400, and performs convection heat exchange with the circumferential side walls of the energy storage module 400. The fluid gradually immerses the energy storage module 400, and flows out of the accommodation space through the second via holes 202. In a process of flowing out of the accommodation space, the fluid flows through the poles of the energy storage module 400, and the fluid performs convection heat exchange with the poles of the energy storage module 400. In this embodiment, a flow velocity of the fluid flowing through the side walls of the energy storage module 400 is high, and effect of cooling and heat dissipation on the side walls is strong, so that axial temperature consistency of the energy storage module 400 can be improved.

In a possible implementation, when the plurality of second via holes 202 are arranged in the second direction and form the at least two rows of second via holes 202, the plurality of second via holes 202 may be arranged in the third direction and form at least two columns of second via holes 202. The at least two rows of second via holes 202 and the at least two columns of second via holes 202 may form at least one grid area. For one column of second via holes 202, in the first direction, the second via holes 202 may be staggered with one column of first via holes 102, or may be provided in a correspondence with one column of first via holes 102. When the second via holes 202 arranged in columns are provided in a correspondence, in the first direction, with the first via holes 102 arranged in columns, the energy storage module 400 may be located in a grid area formed by the second via holes 202 arranged in rows and the second via holes 202 arranged in columns.

In a specific implementation, the energy storage module 400 may be of a cuboid, a cube, a cylinder, or another different shape/type. The immersion liquid cooling apparatus in this embodiment of this application can implement convection heat exchange with circumferential side walls of the energy storage module 400, and convection heat exchange with the poles of the energy storage module 400, and can efficiently cool the energy storage module 400 of a plurality of shapes/types.

FIG. 10 is a diagram of a structure of a bottom plate of an immersion liquid cooling apparatus according to this application. In a possible specific implementation, in addition to forming at least one grid area, as shown in FIG. 10, the plurality of first via holes 102 may be further arranged to form at least one annular first via hole group 110, and the arrangement area may be located in an annular range of the first via hole group 110. Therefore, in actual application, the energy storage module 400 may be located in the annular range of the first via hole group 110. Similarly, the plurality of second via holes 202 may be arranged to form at least one annular second via hole group, and at least one part of the arrangement area may be located in an annular range of the second via hole group in the first direction. Therefore, in actual application, at least one part of the energy storage module 400 may be located in the annular range of the second via hole group in the first direction. Specifically, the energy storage module 400, on the whole, may be located in the annular range of the second via hole group in the first direction; or one part of the energy storage module 400 may be located in the annular range of the second via hole group in the first direction. In this case, in the first direction, one part of the energy storage module 400 overlaps the annular range of the second via hole group in the first direction. It may be understood that, the annular first via hole group 110 may be used in combination with the annular second via hole group, or may be used in combination with the second via holes 202 that form the grid area; and the first via holes 102 that forms the grid area may be used in combination with the annular second via hole group, or may be used in combination with the second via holes 202 that form the grid area.

Refer to FIG. 1 again. The immersion liquid cooling apparatus in this embodiment of this application may further include a liquid inlet 500 and a liquid outlet 600. An external low-temperature fluid may enter the accommodation space in the apparatus through the liquid inlet 500, exchange heat with the energy storage module 400, and flow out of the accommodation space through the liquid outlet 600. This process is repeated. The liquid inlet 500 may be provided on the bottom plate 100, the liquid inlet 500 may be in communication with the first flow channel, the liquid outlet 600 may be provided on the top plate 200, and the liquid outlet 600 may be in communication with the second flow channel. In this case, the fluid can enter the first flow channel through the liquid inlet 500 at specific pressure, and then jet into the accommodation space through the first via holes 102. The fluid flows out of the accommodation space through the second via holes 202, enters the second flow channel, and then flows out through the liquid outlet 600, that is, the fluid can flow from bottom to top in the accommodation space. Alternatively, the liquid inlet 500 may be provided on the top plate 200, the liquid inlet 500 may be in communication with the second flow channel, the liquid outlet 600 may be provided on the bottom plate 100, and the liquid outlet 600 may be in communication with the first flow channel. In this case, the fluid can enter the second flow channel through the liquid inlet 500 at specific pressure, and then jet into the accommodation space through the second via holes 202. The fluid flows out of the accommodation space through the first via holes 102, enters the first flow channel, and then flows out through the liquid outlet 600, that is, the fluid can flow from top to bottom in the accommodation space. When the fluid flows from top to bottom, a flow velocity of the fluid may be further increased under an action of gravity, so that efficiency of convection heat exchange between the fluid and the energy storage module 400 can be improved. In actual application, the fluid may be an insulation liquid such as a fluorinated liquid or oil. A type of the fluid is not limited in this embodiment of this application, and may be specifically set based on an actual requirement.

In a specific implementation, the liquid inlet 500 may be provided at a middle position of the bottom plate 100 in the second direction, and the fluid entering the first flow channel may jet into the accommodation space through the first via holes 102 in a short flow path, so that effect of cooling the energy storage module 400 can be improved. The liquid outlet 600 may be provided at a middle position of the top plate 200 in the second direction, and the fluid that enters the second flow channel through the second via holes 202 may enter the liquid outlet 600 through a short flow path, so that heat can be quickly taken out, and effect of cooling the energy storage module 400 can be improved. Alternatively, the liquid inlet 500 may be provided at a middle position of the top plate 200 in the second direction. Similarly, the fluid entering the second flow channel may jet into the accommodation space through the second via holes 202 in a short flow path, so that effect of cooling the energy storage module 400 can be improved. The liquid outlet 600 may be provided at a middle position of the bottom plate 100 in the second direction. Similarly, the fluid that enters the first flow channel through the first via holes 102 may enter the liquid outlet 600 through a short flow path, so that heat can be quickly taken out, and effect of cooling the energy storage module 400 can be improved.

In addition to being provided on the bottom plate 100 or the top plate 200, the liquid inlet and the liquid outlet may alternatively be provided on the side plate 300. In this case, a third flow channel may be provided in the side plate 300, and the liquid inlet and the liquid outlet are in communication with the flow channel in the bottom plate 100 or the top plate 200 through the third flow channel in the side plate 300. For example, the liquid inlet is provided on the side plate 300, the liquid inlet is in communication with the second flow channel in the top plate 200 through the third flow channel, the liquid outlet is also provided on the side plate 300, and the liquid outlet is in communication with the first flow channel in the bottom plate 100 through a different third flow channel. In actual application, the fluid enters the third flow channel through the liquid inlet, then enters the second flow channel, and then jets into the accommodation space through the second via holes 202, and the fluid flows out of the accommodation space through the first via holes 102, enters the first flow channel, then enters the different third flow channel, and then flows out through the liquid outlet, so that the fluid flows from top to bottom in the accommodation space. Alternatively, the liquid inlet is provided on the side plate 300, and the liquid outlet is provided on the bottom plate 100. Alternatively, the liquid inlet is provided on the side plate 300, and the liquid outlet is provided on the top plate 200. The liquid inlet and the liquid outlet are provided on the bottom plate 100, the top plate 200, or the side plate 300. This may be set in a plurality of cases based on an actual requirement, and details are not listed herein in this application.

In a specific implementation, the liquid inlet 500 and the liquid outlet 600 may be provided on a same side of the immersion liquid cooling apparatus in the second direction. This helps shorten a length of a pipe connected to the outside. The second direction herein is perpendicular to the first direction, and the second direction may be the y direction in each figure, or may be the z direction in each figure.

It may be understood that various numeric numbers in embodiments of this application are merely distinguishing for ease of description, and are not intended to limit the scope of embodiments of this application. Sequence numbers of the foregoing processes do not mean execution sequences, and the execution sequences of the processes should be determined based on functions and internal logic of the processes.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An immersion liquid cooling apparatus, comprising a bottom plate, a top plate, and a plurality of side plates, wherein the bottom plate and the top plate are spaced apart in a first direction, and the plurality of side plates, the bottom plate, and the top plate are enclosed to form sealed accommodation space;
a first flow channel is provided inside the bottom plate, a plurality of first via holes are provided on a side that is of the bottom plate and that faces the top plate in the first direction, the first via holes are in communication with the first flow channel and the accommodation space; and at least one arrangement area is provided on the side that is of the bottom plate and that faces the top plate in the first direction, the arrangement area is used to arrange a component that needs heat exchange, and the first via holes and the arrangement area are staggered; and
a second flow channel is provided inside the top plate, a plurality of second via holes are provided on a side that is of the top plate and that faces the bottom plate in the first direction, and the second via holes are in communication with the second flow channel and the accommodation space.

2. The immersion liquid cooling apparatus according to claim 1, wherein the plurality of first via holes are arranged in a second direction to form at least two rows of first via holes, and the second direction is perpendicular to the first direction; and
the arrangement area is located between two adjacent rows of the first via holes.

3. The immersion liquid cooling apparatus according to claim 2, wherein the plurality of first via holes are arranged in a third direction to form at least two columns of first via holes, and the third direction is perpendicular to the first direction and the second direction; and
the arrangement area is located between two adjacent columns of the first via holes.

4. The immersion liquid cooling apparatus according to claim 1, wherein the plurality of second via holes are arranged in a second direction to form at least two rows of second via holes, and the second direction is perpendicular to the first direction.

5. The immersion liquid cooling apparatus according to claim 4, wherein the plurality of second via holes are arranged in a third direction to form at least two columns of second via holes, and the third direction is perpendicular to the first direction and the second direction.

6. The immersion liquid cooling apparatus according to claim 4, wherein the at least two rows of second via holes and the at least two rows of first via holes are staggered in the first direction.

7. The immersion liquid cooling apparatus according to claim 1, wherein the plurality of first via holes are arranged to form at least one annular first via hole group, and the arrangement area is located in an annular range of the first via hole group.

8. The immersion liquid cooling apparatus according to claim 7, wherein the plurality of second via holes are arranged to form at least one annular second via hole group, and at least one part of the arrangement area is located in an annular range of the second via hole group in the first direction.

9. The immersion liquid cooling apparatus according to any one of claims 1 to 8, further comprising a liquid inlet and a liquid outlet, wherein
the liquid inlet is in communication with the first flow channel, and the liquid outlet is in communication with the second flow channel; or
the liquid inlet is in communication with the second flow channel, and the liquid outlet is in communication with the first flow channel.

10. The immersion liquid cooling apparatus according to claim 9, wherein the liquid inlet is provided at a middle position of the bottom plate in the second direction, the liquid outlet is provided at a middle position of the top plate in the second direction, and the second direction is perpendicular to the first direction; or
the liquid inlet is provided at a middle position of the top plate in the second direction, and the liquid outlet is provided at a middle position of the bottom plate in the second direction.

11. The immersion liquid cooling apparatus according to claim 9, wherein the liquid inlet and the liquid outlet are provided on a same side of the immersion liquid cooling apparatus in the second direction, and the second direction is perpendicular to the first direction.

12. An energy storage device, comprising at least one energy storage module and the immersion liquid cooling apparatus according to any one of claims 1 to 11, wherein
the energy storage module is accommodated in the accommodation space.

13. The energy storage device according to claim 12, wherein the plurality of energy storage modules are arranged in a plurality of rows in the second direction, or the plurality of energy storage modules are arranged in a plurality of columns in the third direction, wherein the second direction is perpendicular to the first direction, and the third direction is perpendicular to the first direction and the second direction; and
the energy storage modules are arranged in a one-to-one correspondence with the arrangement areas.

14. The energy storage device according to claim 13, wherein the plurality of rows of second via holes respectively correspond to poles of the plurality of rows of energy storage modules in the first direction.
